Europäisches Patentamt

European Patent Office

Office européen des brevets

(19)

(11) Numéro de publication : **0 110 764**
**B1**

(12) # FASCICULE DE BREVET EUROPÉEN

(45) Date de publication du fascicule du brevet :
**22.10.86**

(21) Numéro de dépôt : **83402219.6**

(22) Date de dépôt : **18.11.83**

(51) Int. Cl.⁴ : **C 04 B 28/26**; C 04 B 12/04, C 04 B 38/00, E 21 B 36/00

---

(54) Matériau contenant des silicates de sodium, utilisable notamment pour l'isolation thermique des puits de production d'huiles lourdes.

---

(30) Priorité : **24.11.82 FR 8219836**

(43) Date de publication de la demande :
**13.06.84 Bulletin 84/24**

(45) Mention de la délivrance du brevet :
**22.10.86 Bulletin 86/43**

(84) Etats contractants désignés :
**DE GB NL**

(56) Documents cités :
**FR-A- 1 355 859**
**FR-A- 1 410 084**
**FR-A- 2 406 659**
**US-A- 3 525 399**

(73) Titulaire : **INSTITUT FRANCAIS DU PETROLE**
**4, Avenue de Bois-Préau**
**F-92502 Rueil-Malmaison (FR)**

(72) Inventeur : **Lesage, Jean**
**15, Place d'Acre**
**F-78310 Maurepas-Elancourt (FR)**
Inventeur : **Mergier, Nicole**
**171, avenue du Roule**
**F-92000 Neuilly-sur-Seine (FR)**
Inventeur : **Auneau, Louis**
**11, route d'Auffargis Vieille Eglise en Yvelines**
**F-78120 Rambouillet (FR)**

Jouve, 18, rue St-Denis, 75001 Paris, France

EP 0 110 764 B1

## Description

La présente invention concerne un nouveau matériau, utilisable notamment pour l'isolation des colonnes destinées à véhiculer la vapeur dans la récupération assistée des huiles lourdes d'hydrocarbures par voie thermique.

Parmi les procédés de récupération des huiles lourdes, l'un des procédés consiste à injecter de la vapeur dans une colonne creuse (tubing) disposée dans un puits de production, afin de diminuer la viscosité des huiles et permettre ainsi leur récupération soit par le même puits, soit par un autre puits relativement proche.

Le plus souvent il s'avère nécessaire d'isoler la colonne sur sa paroi externe de façon à améliorer la qualité de la vapeur en fond de puits, d'une part, et de limiter, d'autre part, les effets des contraintes mécaniques et thermiques qui se produisent le long du tubage et peuvent conduire à une déformation (flambage) et une rupture des joints lorsque la colonne n'est pas isolée et que la température de vapeur est élevée (supérieure à 250 °C).

De nombreuses techniques d'isolation ont été décrites dans l'art antérieur : certaines techniques font appel à des fluides occupant tout l'espace annulaire, tels qu'un gaz sous très faible pression, une huile minérale visqueuse contenant du silicate de magnésium fibreux ou de l'amiante finement divisé, ou un mélange d'huile lourde, d'acide gras et d'agent de saponification, ou encore des gels stables et de faible conductivité, ou du soufre fondu. Ces divers procédés présentent l'inconvénient d'entraver une éventuelle utilisation de l'espace annulaire pour le passage d'un fluide par exemple.

D'autres méthodes d'isolation de la colonne ne présentent pas cet inconvénient. On peut citer le revêtement de la colonne au moyen de peinture isolante ou l'emploi d'une garniture de complétion munie d'une gaine isolante. Ces procédés, qui ne sont pas très efficaces, sont peu employés. Les procédés les plus employés sont d'une part le procédé Thermocase III qui consiste en un gainage complexe des colonnes et un système de soufflets mis en place avant la descente de la colonne, mais ce procédé est très cher, et d'autre part le procédé du brevet US 3 525 399 qui consiste à déposer sur la paroi de la colonne une mousse de silicate de métal alcalin qui est très isolante mais qui est très lente à solubiliser (durée de dissolution de l'ordre de huit jours) ce qui retarde le retrait de la colonne en fin d'exploitation de puits. Cette mousse est obtenue par chauffage à l'ébullition d'une solution de silicate de sodium de rapport pondéral $SiO_2/Na_2O$ de 3,2 : 1 ou de rapport pondéral $SiO_2/K_2O$ de 2,4 : 1, correspondant à des rapports molaires $SiO_2/Na_2O$ ou $SiO_2/K_2O$ respectivement égaux à 3,3 : 1 et 3,7 : 1.

Le matériau d'isolation de l'invention est une mousse de silicate de métal alcalin qui présente le double avantage de pouvoir se former facilement par simple chauffage d'une solution aqueuse de silicate de métal alcalin et de pouvoir se solubiliser rapidement dans l'eau lorsque sa présence n'est plus souhaitée, par exemple lorsqu'on démonte une colonne de tubes dans un puits de production.

Le matériau isolant de l'invention est formé par chauffage à l'ébullition du mélange d'une solution de silicate de sodium de rapport molaire $SiO_2/Na_2O$ (RM) compris entre 2,8 : 1 et 4 : 1, et de préférence entre 3,1 : 1 et 3,4 : 1 avec une solution de silicate de sodium de rapport molaire $SiO_2/Na_2O$ (Rm) compris entre 1,8 : 1 et 2,4 : 1 et de préférence entre 1,9 : 1 et 2,1 : 1.

L'emploi de mélanges de deux silicates de sodium de rapports $SiO_2/Na_2O$ différents a déjà été décrit notamment dans le brevet FR 1 355 859. Mais ces mélanges sont utilisés en faibles proportions comme liants dans des matériaux réfractaires, et dans cette application, ils ne sont pas mis en jeu sous forme de solutions aqueuses, mais ils sont mélangés, en poudre, aux autres ingrédients constitutifs du matériau réfractaire, pour former une pâte, qui est ensuite durcie.

Les excellentes propriétés des mousses obtenues selon l'invention apparaîtront encore plus surprenantes à l'examen des essais et considérations suivants :

Les mousses de polysilicates peu solubles utilisées selon l'art antérieur, sont généralement des mousses obtenues à partir d'une solution de silicate de sodium dont le rapport molaire $SiO_2/Na_2O$ est voisin de 3,2 à 3,3. Les mousses obtenues ont généralement une densité voisine de 0,25 et une solubilité très faible dans l'eau. Il est possible d'améliorer considérablement la solubilité dans l'eau de ces mousses, en augmentant sensiblement le pH de la solution de silicate, soit en ajoutant un alcali tel que la soude ou la potasse à la solution de silicate de rapport molaire $SiO_2/Na_2O$ = 3,2 ou 3,3, soit en utilisant une solution de silicate, de sodium par exemple, ayant un rapport molaire $SiO_2/Na_2O$ plus faible, c'est-à-dire de l'ordre de 2. Mais dans ces conditions la mousse de polysilicate ne se forme que si l'on assure une élimination totale de l'eau. La mousse obtenue est alors très soluble dans l'eau. Mais cette composition ne peut être utilisée pour l'isolation des colonnes, car la mousse obtenue a une solubilité telle qu'elle se redissout au fur et à mesure qu'elle se forme dans l'espace annulaire. Par ailleurs l'alcalinisation de la solution de silicate au moyen d'un alcali faible tel que l'hydroxyde de zinc ou l'ammoniaque, conduit aux mêmes résultats décevants.

Il a été découvert que l'association des solutions de deux silicates, l'un de rapport molaire élevé $SiO_2/Na_2O$ (RM) de 2,8 à 4 et de préférence de 3,1 à 3,4 et l'autre de rapport molaire faible (Rm) de 1,8 à 2,4 et de préférence de 1,9 à 2,1 ne présente pas cet inconvénient. En effet si l'on mélange intimement des solutions de ces deux silicates ainsi définis, on obtient des solutions qui conduisent aisément à la formation de mousse le long de la colonne, ladite mousse étant plus isolante, plus homogène et beaucoup plus soluble que celle obtenue avec la solution de silicate de RM voisin de 3,3. La proportion de solution de silicate de sodium de rapport Rm est de 5 à 40 % et de préférence 15 à 30 % en volume par rapport à l'ensemble des solutions des rapports Rm et RM. Ces mélanges conduisent à des mousses ayant de façon surprenante une densité et un coefficient de conductivité thermique très proches de ceux des mousses obtenues à partir de silicates de Rm faibles purs, bien que la proportion de ce type de silicate dans le mélange soit réduite, mais elles présentent l'avantage sur ces dernières de se former aussi aisément sur la paroi de la colonne que les mousses obtenues à partir de silicate de RM élevé. Elles sont particulièrement utilisables dans le domaine des températures de 150 à 350 °C, correspondant aux températures habituelles de la vapeur injectée dans les puits de récupération d'huiles lourdes, mais elles sont utilisables également pour l'isolation de matériaux jusqu'à 800 °C.

Une amélioration de la solubilité des mousses peut être obtenue lorsqu'on ajoute au mélange de silicates décrit ci-dessus un agent tensioactif anionique, par exemple un dérivé d'alkylsulfate ou un dérivé sulfoné de monoester ou diester, ou encore un dérivé d'alkylarène sulfonate ; ou un agent tensioactif non ionique, par exemple un ester d'acide gras ou un polyéthoxyester d'acide gras ou d'alkylphénol ; ou un agent tensio actif cationique, par exemple un dérivé d'oxyalcoylamide ou un dérivé des mono et diamines aliphatiques, sans que cette liste soit limitative.

La densité du mélange des solutions peut être comprise par exemple entre 1,2 et 1,6. Il est avantageux d'utiliser des solutions concentrées ; on peut donc même procéder à une concentration préalable des solutions du commerce.

La concentration de la solution de silicate de sodium ayant le rapport molaire $SiO_2/Na_2O$ le plus élevé (RM) peut être par exemple d'environ 30 à 40 % en poids et celle de la solution de silicate de sodium ayant le rapport molaire $SiO_2/Na_2O$ le plus faible (Rm) par exemple d'environ 40 à 50 % en poids, ces valeurs n'étant pas limitatives.

Les exemples suivants illustrent l'invention. Ils ne doivent en aucune manière être considérés comme limitatifs.

Les exemples 1, 2, 7, 8 et 9 sont donnés à titre de comparaison.

Les solutions aqueuses de silicate de sodium ayant un rapport molaire $SiO_2/Na_2O$ de 3,3 utilisées dans les exemples 2 à 7 et 9 ont une concentration de 33,7 % en poids (densité = 1,33). Les solutions aqueuses de silicate de sodium ayant un rapport molaire $SiO_2/Na_2O$ de 2 utilisées dans les exemples 3 à 8 ont une concentration de 46,4 % en poids (densité = 1,54).

### Exemple 1 (comparaison)

On réalise une maquette représentant un tronçon de puits utilisable pour la récupération assistée des huiles lourdes par injection de vapeur. Ce tronçon est constitué d'un élément de colonne (hauteur 500 mm, diamètre intérieur 63 mm, diamètre extérieur 74 mm) et d'un tubage concentrique (hauteur 500 mm, diamètre intérieur 227 mm, diamètre extérieur 245 mm). A chaque extrémité de cet ensemble sont fixées des plaques de matériau isolant destiné à limiter les effets de fonds. De plus le tubage est entouré d'une couche isolante de vermiculite de 70 mm d'épaisseur. Une résistance électrique permet de chauffer la paroi interne de la colonne et de simuler ainsi le passage d'un fluide chaud. Des thermocouples placés sur la paroi externe du tubage permettent de mesurer sa température. Enfin la maquette est équipée d'orifices de remplissage et de vidange permettant l'introduction et l'élimination des solutions de silicate de sodium.

Dans ce premier exemple on chauffe la colonne en l'absence de toute isolation. La température relevée au niveau du tubage se stabilise à 196 °C pour une température de colonne de 300 °C ± 5 °C et à 136 °C pour une température de colonne de 200 °C ± 5 °C.

### Exemple 2 (comparaison)

Dans la maquette décrite dans l'exemple 1, on introduit, dans l'espace annulaire une solution de silicate de sodium dont le rapport molaire RM est de 3,3. On chauffe la colonne à une température de 300 °C ± 5 °C. Après 8 h de chauffage on élimine la solution résiduelle. La mousse formée sur la paroi externe de la colonne a une épaisseur moyenne de 13 mm. Son coefficient de conductivité thermique λ exprimé en watts par mètre. degré Kelvin est de 0,10. Sa densité est de 0,24.

On chauffe à nouveau la colonne à une température bien régulée jusqu'à stabilisation de la température du tubage. Celle-ci se stabilise à 145 °C pour une température de colonne de 300 °C ± 5 °C et à 101 °C pour une température de colonne de 200 °C ± 5 °C.

La mousse formée se dissout dans l'eau en 8 jours environ à la température de 20 °C et en 2 jours environ à 60 °C.

L'aspect de la mousse est hétérogène, les pores étant beaucoup plus fins au voisinage de la paroi de la colonne qu'à la périphérie de la mousse formée.

### Exemple 3

On reproduit l'essai de l'exemple 2 en introduisant dans l'espace annulaire une solution composée de 90 % en volume d'une solution de silicate de sodium de densité 1,33 (RM = 3,3) et de 10 % en volume d'une solution de silicate de sodium de densité 1,54 (Rm = 2). On chauffe la colonne à une température de 300 °C ± 5 °C. Après 8 h de chauffage on élimine la solution résiduelle. La mousse formée sur la paroi de la colonne a une épaisseur moyenne de 14 mm. Ses caractéristiques sont un λ de 0,063 W/m · K et une densité de 0,138.

On chauffe à nouveau la colonne à une température bien régulée jusqu'à stabilisation de la température du tubage. Celle-ci se stabilise à 135 °C pour une température de colonne de 300 °C ± 5 °C et à 94 °C pour une température de colonne de 200 °C ± 5 °C.

La mousse obtenue se dissout en 24 h dans l'eau à 20 °C et en 4 h dans l'eau à 60 °C. L'aspect de la mousse est très homogène.

Exemple 4

On reproduit l'essai de l'exemple 2 en introduisant dans l'espace annulaire une solution composée de 85 % en volume d'une solution de silicate de sodium de densité 1,33 (RM = 3,3) et de 15 % en volume d'une solution de silicate de sodium de densité 1,54 (Rm = 2). On chauffe la colonne à une température de 300 °C ± 5 °C. Après 8 h de chauffage on élimine la solution résiduelle. La mousse formée sur la paroi de la colonne a une épaisseur moyenne de 14 mm, λ = 0,06 W/m · K ; densité : 0,129.

On chauffe à nouveau la colonne à une température bien régulée jusqu'à stabilisation de la température du tubage. Celle-ci se stabilise à 128 °C pour une température de colonne de 300 °C ± 5 °C et à 89 °C pour une température de colonne de 200 °C ± 5 °C.

La mousse obtenue se dissout entièrement en moins de 2 h dans l'eau à 60 °C et en moins de 24 h dans l'eau à 20 °C. L'aspect de la mousse est très homogène (pores fins et réguliers).

Exemple 5

On reproduit l'essai de l'exemple 2 en introduisant dans l'espace annulaire une solution composée de 75 % en volume d'une solution de silicate de sodium de densité 1,33 (RM = 3,3) et de 25 % en volume d'une solution de silicate de sodium de densité 1,54 (Rm = 2). On chauffe la colonne à une température de 300 °C ± 5 °C. Après 8 h de chauffage on élimine la solution résiduelle. La mousse formée sur la paroi de la colonne a une épaisseur moyenne de 16 mm. Ses caractéristiques sont un λ de 0,052 W/m · K et une densité de 0,120.

On chauffe à nouveau la colonne à une température bien régulée jusqu'à stabilisation de la température du tubage. Celle-ci se stabilise à 120 °C pour une température de colonne de 300 °C ± 5 °C et à 81 °C pour une température de colonne de 200 °C ± 5 °C.

La mousse obtenue se dissout en 1 h dans l'eau à 60 °C. L'aspect de la mousse est très homogène.

Exemple 6

On reproduit l'essai de l'exemple 2 en introduisant dans l'espace annulaire une solution composée de 65 % en volume d'une solution de silicate de sodium de densité 1,33 (RM = 3,3) et de 35 % en volume d'une solution de silicate de sodium de densité 1,54 (Rm = 2). On chauffe la colonne à une température de 300 °C ± 5 °C. Après 8 h de chauffage on élimine la solution résiduelle. La mousse formée sur la paroi de la colonne a une épaisseur moyenne de 17 mm. Ses caractéristiques sont un λ de 0,065 W/m · K et une densité de 0,120.

On chauffe à nouveau la colonne à une température bien régulée jusqu'à stabilisation de la température du tubage. Celle-ci se stabilise à 127 °C pour une température de colonne de 300 °C ± 5 °C et à 88 °C pour une température de colonne de 200 °C ± 5 °C.

La mousse obtenue se dissout en 1 h dans l'eau à 60 °C. L'aspect de la mousse est hétérogène ; les pores sont fins au voisinage du tubing mais de grosses bulles vitrifiées apparaissent en surface. Ce phénomène s'accompagne d'une légère augmentation du coefficient de conductivité thermique, comparé à celui mesuré dans les autres exemples selon l'invention (exemples 3 à 5).

Exemple 7 (comparaison)

On reproduit l'essai de l'exemple 2 en introduisant dans l'espace annulaire une solution composée de 50 % en volume d'une solution de silicate de sodium de densité 1,33 (RM = 3,3) et de 50 % en volume d'une solution de silicate de sodium de densité 1,54 (Rm = 2). On chauffe la colonne à une température de 300 °C ± 5 °C. Après 8 h de chauffage, aucune formation de mousse n'est observée sur la paroi externe de la colonne.

Exemple 8 (comparaison)

On reproduit l'essai de l'exemple 2 en introduisant dans l'espace annulaire une solution de silicate de sodium de densité 1,54 (Rm = 2). On chauffe la colonne à une température de 300 °C ± 5 °C. Après 8 h de chauffage, aucune formation de mousse n'est observée sur la paroi externe de la colonne.

Exemple 9 (comparaison)

On reproduit l'essai de l'exemple 4 en remplaçant le mélange de silicates par une solution de silicate de sodium de densité 1,33 (RM = 3,3) dans laquelle on ajoute 15 g de soude pure en pastille par litre de solution, jusqu'à complète dissolution de façon à obtenir une solution de même teneur en $Na_2O$. On chauffe la colonne à une température de 300 °C ± 5 °C. Après 8 h de chauffage aucune formation de mousse n'est observée sur la paroi externe de la colonne.

Revendications

1. Matériau isolant, sous forme de mousse, caractérisé en ce qu'il est obtenu par chauffage du mélange de 95 à 60 % en volume d'une solution aqueuse de silicate de sodium de rapport molaire (RM) $SiO_2/Na_2O$ de 2,8 : 1 à 4 : 1 et de 5 à 40 % en volume d'une solution aqueuse de silicate de sodium de rapport molaire (Rm) $SiO_2/Na_2O$ de 1,8 à 2,4.

2. Matériau isolant selon la revendication 1, caractérisé en ce qu'il est obtenu à partir d'une solution de rapport RM de 3,1 à 3,4 et d'une solution de rapport Rm de 1,9 à 2,1.

3. Matériau isolant selon la revendication 1 ou 2, caractérisé en ce qu'il est obtenu par ledit chauffage, les proportions du mélange étant de 15 à 30 % en volume de la solution de rapport Rm et de 85 à 70 % en volume de la solution de rapport RM.

4. Matériau isolant selon l'une des revendications 1 à 3, caractérisé en ce que la solution aqueuse de silicate de sodium de rapport molaire $SiO_2/Na_2O$ le plus élevé (RM) a une concentration d'environ 30 à 40 % en poids et la solution aqueuse de silicate de sodium de rapport molaire $SiO_2/Na_2O$ le plus faible a une concentration d'environ 40 à 50 % en poids.

5. Matériau isolant selon l'une des revendications 1 à 4, caractérisé en ce que le mélange des solutions de silicates de sodium a une densité de 1,2 à 1,6.

6. Utilisation d'un matériau selon l'une des revendications 1 à 5 pour l'isolation thermique.

7. Utilisation selon la revendication 6, dans le domaine de température de 150 à 800 °C.

8. Utilisation selon la revendication 6 ou 7, appliquée à la paroi d'une colonne creuse destinée à véhiculer de la vapeur d'eau dans un puits pour la récupération d'une huile lourde d'hydrocarbures.

## Claims

1. An insulating foam material characterized in that it is obtained by heating a mixture of 95 to 60 % by volume of an aqueous sodium silicate solution of a $SiO_2/Na_2O$ molar ratio (MR) of 2.8 : 1 to 4 : 1 with 5 to 40 % by volume of an aqueous sodium silicate solution of a $SiO_2/Na_2O$ molar ratio (mR) of 1.8 to 2.4.

2. An insulating material according to claim 1, characterized in that it is obtained from a solution of a MR ratio of 3.1 to 3.4 and a solution of a mR ratio of 1.9 to 2.1.

3. An insulating material according to claim 1 or 2, characterized in that it is obtained by said heating, the proportions of the mixture being 15 to 30 % by volume of the solution of ratio mR and 85 to 70 % by volume of the solution of ratio MR.

4. An insulating material according to one of claims 1 to 3, characterized in that the aqueous sodium silicate solution of higher $SiO_2/Na_2O$ molar ratio (MR) has a concentration of about 30 to 40 % by weight and the aqueous sodium silicate solution of lower $SiO_2/Na_2O$ molar ratio has a concentration of about 40 to 50 % by weight.

5. An insulating material according to one of claims 1 to 4, characterized in that the mixture of the sodium silicates solutions has a specific gravity of 1.2 to 1.6.

6. The use of a material according to one of claims 1 to 5 for thermal insulation.

7. The use according to claim 6, in the temperature range of 150 to 800 °C.

8. The use according to claim 6 or 7, applied to the wall of a hollow column for transporting steam into a well for recovery of a hydrocarbons heavy oil.

## Patentansprüche

1. Isoliermaterial in Schaumform, dadurch gekennzeichnet, daß es erhältlich ist durch Erwärmen des Gemisches aus 95 bis 60 Volumen-% einer wässrigen Lösung von Natriumsilikat mit einem $SiO_2/Na_2O$-Molverhältnis (RM) von 2,8 : 1 bis 4 : 1 und von 5 bis 40 Volumen-% einer wässrigen Lösung von Natriumsilikat mit einem $SiO_2/Na_2O$-Molverhältnis (Rm) von 1,8 bis 2,4.

2. Isoliermaterial nach Anspruch 1, dadurch gekennzeichnet, daß es erhältlich ist aus einer Lösung mit dem Verhältnis RM gleich 3,1 bis 3,4 und einer Lösung mit dem Verhältnis Rm von 1,9 bis 2,1.

3. Isoliermaterial nach Anspruch 1 oder 2, dadurch gekennzeichnet, daß es durch diese Erwärmung, wobei die Gemischanteile 15 bis 30 Volumen-% der Lösung mit dem Verhältnis Rm und 85 bis 70 Volumen-% der Lösung mit dem Verhältnis RM betragen, erhalten wird.

4. Isoliermaterial nach einem der Ansprüche 1 bis 3, dadurch gekennzeichnet, daß die wässrige Natriumsilikatlösung mit dem höchsten $SiO_2/Na_2O$-Molverhältnis (RM) eine Konzentration von etwa 30 bis 40 Gew.-% und die wässrige Natriumsilikatlösung mit dem geringsten $SiO_2/Na_2O$-Molverhältnis eines Konzentration von etwa 40 bis 50 Gew.-% aufweist.

5. Isoliermaterial nach einem der Ansprüche 1 bis 4, dadurch gekennzeichnet, daß das Gemisch der Natriumsilikatlösungen eine Dichte von 1,2 bis 1,6 aufweist.

6. Verwendung eines Materials nach einem der Ansprüche 1 bis 5 für die Wärmeisolierung.

7. Verwendung nach Anspruch 6 im Temperaturbereich von 150 bis 800 °C.

8. Verwendung nach einem der Ansprüche 6 oder 7 an der Wandung einer hohlen Kolonne, die dazu bestimmt ist, Wasserdampf in ein Bohrloch zur Gewinnung eines schweren Kohlenwasserstoff- Oels zu fördern.